# EUROPEAN PATENT APPLICATION

(11) **EP 3 611 457 A1**
(43) Date of publication of application: **19.02.2020**
(21) Application number: 18382615.5
(22) Date of filing: 17.08.2018
(51) Int. Cl.: F28D 20/02, F25D 3/00, F25D 11/00

(54) **THERMAL ACCUMULATOR CONTAINING A PCM, AND REFRIGERATED CONTAINER EQUIPED WITH SAID THERMAL ACCUMULATOR**

(71) Applicant: Biofreshtec S.L., 08172 San Cugat Del Valles (ES)
(72) Inventor: GUILLEN MARTÍNEZ, Javier, 08172 San Cugat del Valles (ES)
(74) Representative: Curell Suñol S.L.P.

(57) **Abstract**

Thermal accumulator (1) comprising external walls (2) delimiting a closed storage space (3) that contains a PCM (4) and a heat exchanger (5) formed by a conduit for fluids having a section (12) inside said storage space (3). Two of said external walls (2) are facing one another and are connected between them by internal walls (10a) located inside the storage space (3) and arranged so that cells (11) containing the PCM (4) are formed in said storage space (3) by said internal walls (10a) and said external walls (2). The external walls (2) and the internal walls (10a, 10b) are flat metal sheets. The section of the heat exchanger (5) that goes inside the storage space (3) is joined to a face of one of said external walls (2) and internal walls (10a). The invention also relates to a refrigerated container for transporting goods comprising the thermal accumulator (1).

## Description

### Field of the Invention

The invention relates to a thermal equipment containing a PCM (phase change material) for charging a thermal load and later delivering it to an external environment.

More specifically, the invention relates to a thermal accumulator containing a PCM, said thermal accumulator comprising external walls delimiting a closed storage space, a PCM contained in said storage space and at least a heat exchanger formed by a conduit for fluids, which has an inlet port and an outlet port, said heat exchanger having a section that goes inside said storage space and which is in contact with said PCM, and wherein said external walls have an inner surface in contact with said PCM and an outer surface in contact with an external environment surrounding said thermal accumulator.

The invention also relates to a refrigerated container for transporting goods comprising said thermal accumulator.

### State of the Art

The thermal accumulators to which the invention refers are generally used to refrigerate an environment by direct contact with the external walls of the thermal accumulator. The thermal accumulator is previously charged with a cooling load by circulating a coolant through the heat exchanger, making the PCM to change phase from liquid to solid. The thermal accumulator is fully charged with the cooling load when all the PCM is in solid state. The coolant can either be a liquid that maintains its liquid state, for instance a liquid that circulates in a secondary circuit of a refrigeration unit, or a refrigerant that is evaporated in the heat exchanger. In this last case, the heat exchanger of the thermal accumulator is the evaporator of a refrigeration unit that typically comprises an evaporator, a compressor, a condenser and an expansion valve. The heat exchanger can be connected to the rest of the refrigeration unit either permanently or detachably by means of connection hoses. Once the PCM contained in the thermal accumulator has been charged with the cooling load, the refrigeration unit is turned off. The thermal accumulator can then refrigerate the environment in an autonomous manner (without the refrigeration unit) during a long period of time by transferring the cooling load to the environment. This transfer is operated by heat exchange between the environment and the PCM through the external walls of the thermal accumulator, while the PCM progressively returns to the liquid phase. The temperature of the external walls remains cold and sensibly constant since the PCM stays at its phase change temperature.

The known thermal accumulators of this type have a quite complex structure. In particular, they are provided with fins or other extended surfaces intended to increase the heat exchange between the PCM and the environment. This increases the cost and the weight of the thermal accumulator. In addition, when fins or other extended surfaces are provided on the outer surface of the external walls, they form hard-to-clean nooks and crevices in which dirt accumulates. One of the implications of this is that the thermal accumulator can be rather unsuitable for installations with strict hygiene requirements, for instance for storing and transporting food or pharmaceutical products.

EP1236960A1 discloses a thermal accumulator of the type indicated above, in which the external walls are plates moulded with fins and the heat exchanger is formed by tubes with plate-shaped fins. WO2014178015A1 discloses a similar thermal accumulator in which the plate-shaped fins of the heat exchanger extend from one external wall to another opposite external wall.

### Description of the Invention

The purpose of the invention is to provide a thermal accumulator of the type indicated above having a reduced weight and a reduced manufacturing cost, but without reducing the efficiency of the processes of charging the thermal accumulator with a thermal load and subsequently transferring this thermal load to an external environment surrounding the thermal accumulator. Another purpose of the invention is to avoid as much as possible the presence of surfaces prone to accumulate dirt.

This is achieved by means of a thermal accumulator of the type indicated above, characterized in that:
- at least two of the external walls are facing one another and are connected between them by internal walls, said internal walls being located inside the storage space and being arranged so that cells containing the PCM are formed in said storage space by said internal walls and said external walls;
- said external walls and said internal walls are flat metal sheets;
- the section of the heat exchanger that goes inside the storage space is joined to a face of at least one of said external walls and internal walls that form said cells.

The thermal accumulator according to the invention can be manufactured at a reduced cost, since it can be assembled by using flat metal sheets. Preferably the thickness of the flat metal sheets is not greater than 1.016 mm (0.04 inch), more preferably it is in the range between 0.4 mm and 0.8 mm. The internal walls that connect two facing external walls provide higher mechanical resistance to the body formed by said external walls. Moreover, the use of metal sheets reduces the weight of the thermal accumulator, compared to prior art in which the walls are thicker metal plates moulded with fins. Furthermore, the cells formed by the internal walls and the external walls conduct heat between said external walls and the whole volume of the PCM contained in the storage space, therefore increasing the heat exchange between the external walls and the core of the PCM. This increases the heat exchange between the external environment and the PCM, and also the heat exchange between the heat exchanger, which is joined to the walls, and the PCM. The thermal accumulator can thus be charged with a thermal load heat in an effective manner and it can refrigerate or heat the surrounding environment during a long period of time. On the other hand, thanks to the use of flat metal sheets and the good thermal efficiency achieved, it is possible to avoid providing fins or other extended surfaces on the outer surface of the external walls, hence the thermal accumulator accumulates less dirt and is easier to clean.

The thermal accumulator according to the invention can be used to refrigerate an external environment surrounding it as well as to heat said environment, depending on the solid-liquid phase change temperature of the PCM contained in the storage space referred to the temperature of the environment. In the preferred embodiments the thermal accumulator is intended to refrigerate the environment, and with this purpose the PCM preferably has a solid-liquid phase change temperature not greater than 5 ºC.

The flat metal sheets are advantageously made of a metal having a high thermal conductivity, preferably a thermal conductivity greater than 200 W/(m.K). For instance, a 6000 series aluminium alloy could be used. However, in the preferred embodiments the external walls and the internal walls are flat copper sheets. The term copper is used here in the sense of a copper alloy having a composition of Cu of at least 99.5%. The use of flat copper sheets has two particular advantages related to the invention. On the one hand, flat copper sheets are easily pliable and workable and can be easily connected to one another by brazing, making it easier to manufacture the thermal container. On the other hand, the thermal conductivity of copper is very high, over 60% higher than aluminium, so that the external walls and the internal walls conduct heat between the external environment and the core of the PCM in a very efficient way despite the lack of fins.

In some preferred embodiments the section of the heat exchanger that goes inside the storage space is a coil tube, comprising at least a planar section which is parallel to one of the two facing external walls and which is joined to this external wall. This configuration makes it easier to attach the heat exchanger to the thermal accumulator during the manufacturing thereof and also provides a good thermal contact between said section of the heat exchanger and the cells formed by the walls that conduct heat to the whole volume of the PCM. Moreover, in this configuration the heat exchanger provides mechanical resistance to the external wall made of a flat metal sheet, preventing it from being deformed.

Preferably, said coil tube comprises two planar sections, which are parallel to one and the other of said two facing external walls and which are joined to one and the other of the two facing external walls. This provides particularly good heat conduction between the external walls and the whole volume of the PCM, and prevents the external walls from being deformed.

Preferably, the planar section of said coil tube comprises a succession of straight tubes connected to one another by tube elbows, said straight tubes being positioned so that at the corners formed between said one of the two facing external walls and said internal walls one of said straight tubes is joined to a face of at least one of the external wall and the internal wall. This position of the straight tubes at the corners enhances the heat transmission between the heat exchanger and the whole volume of PCM through the cells formed by the external walls and the internal walls. More preferably, the straight tube is joined both to a face of the external wall and to a face of the internal wall. In this way, the heat transmission with both walls is enhanced and the straight tube reinforces the mechanical connection between the internal wall and the external wall.

In some embodiments, which are particularly suitable for thermal accumulators of larger size with a greater distance between the two facing external walls, the section of the heat exchanger that goes inside the storage space is a coil tube comprising at least an inner section which is separated from the two facing external walls and which is joined to at least one of the internal walls. This arrangement allows a better heat conduction up to the inner central areas of the PCM in the storage space during the process of charging the thermal accumulator with a thermal load.

Preferably, said coil tube comprises at least an inner planar section which is parallel to one of said internal walls and which is joined to this internal wall. This configuration allows an easier attachment of the heat exchanger to the thermal accumulator in the central areas of the storage space and also provides a good thermal contact between said section of the heat exchanger and the internal walls in those areas.

In the preferred embodiments the internal walls are separated from a bottom wall that delimitates the storage space, so that a lower band of said storage space is defined between said bottom wall and a lower edge of said internal walls, the cells being in fluid communication with one another through said lower band. The internal walls are also separated from an upper wall that delimitates the storage space, so that an upper band of said storage space is defined between said upper wall and an upper edge of said internal walls, the cells being in fluid communication with one another through said upper band, and the level of said PCM in said storage space being in said upper band. This configuration allows the PCM to circulate between the cells by natural convection when said PCM is at least partially in liquid phase. This enhances the heat transfer between the PCM and the heat exchanger during the process of charging the thermal accumulator with a thermal load, and also during the process of transmitting said thermal load to the surrounding environment through the external walls.

In a preferred embodiment, the internal walls have folded ends that form a planar flange, and said planar flange rests against the inner surface of one of the two facing external walls and is joined to said inner surface, preferably by brazing. The thermal accumulator can thus be assembled in a cost-effective way and ensuring a good thermal contact between the internal walls and the external walls.

Concerning the PCM, it must be non-corrosive for metals with high thermal conductivity. To this end, several organic compounds can be used as PCM, like for instance a hydroxide peroxide solution or a glycol solution, in particular a propylene glycol solution. However, in the preferred embodiments the PCM is an aqueous salt solution comprising as a solute a salt selected from the group consisting in sodium formate (HCOONa, the sodium salt of formic acid), potassium formate (HCOOK, the potassium salt of formic acid), calcium formate (Ca(HCOO)₂, the calcium salt of formic acid) and magnesium formate (Mg(HCOO)₂, the magnesium salt of formic acid).

These formate brines are particularly suitable as PCM for a thermal accumulator of the type referred to by the invention because they are non-corrosive for metals, because the use thereof as PCM in a thermal accumulator does not pose any complication and is not risky both for the human health and the environment, and because their behaviour in terms of heat transfer and heat accumulation is particularly advantageous.

These formate brines according to the invention are very stable over time, in contrast with hydrogen peroxide that decomposes into H₂O and O₂. This progressive decomposition of hydrogen peroxide obliges to regularly purge the O₂ accumulated in the closed storage space and also causes a progressive loss of the thermal properties of the PCM. By contrast, the formate brines according to the invention remain unaltered in the closed storage space and keep their thermal properties intact during an endless number of heat loading/unloading cycles. Another advantage of the formate brines according to the invention over hydrogen peroxide is that they are also stable at higher temperatures over the melting point, and therefore they are suitable to be used as sensitive heat accumulator. This allows the thermal accumulator to be used both as a latent heat accumulator and as a sensible heat accumulator. The hydrogen peroxide is not suitable to this purpose, because the above mentioned decomposition is accelerated when the temperatures increases.

The formate brines according to the invention are also advantageous over the use of propylene glycol as PCM for several reasons. The thermal conductivity of these formate brines is much higher, and the solid-liquid phase change enthalpy is also much higher. Therefore, the use of these formate brines as PCM provides a higher heat transfer rate by conduction inside the PCM and also provides a higher accumulation of heat by phase-change per unit volume of PCM. Moreover, in these formate brines the kinetics of crystal formation is much better, so that the phase-change temperature remains almost constant (typically with a variation under 1 ºC) between the formation of the first crystals and the formation of the last crystals, and there is no need to significantly sub-cool the liquid in order to trigger the crystallization (typically a subcooling of 1ºC is enough). By contrast, when a glycol solution is used as PCM the variation of phase-change temperature is typically between 5 ºC and 10 ºC and a subcooling of up to 10 ºC can be needed.

In preferred embodiments the PCM is an aqueous salt solution in which the solute is sodium formate. Sodium formate is not harmful to the environment and is suitable for food contact applications. In fact, sodium formate is a codified food additive in food industry. These embodiments of the thermal accumulator are particularly suitable for being used in conditioning environments in which food or pharmaceutical products are present.

In some preferred embodiments, in which the thermal accumulator is intended to refrigerate an external environment, the PCM is an aqueous salt solution in which the solute is sodium formate and wherein the mass fraction of sodium formate in the solution is comprised between 0.05 and 0.25. The crystallization temperature of the brine in this range of mass fraction is between - 4 ºC and - 16 ºC. This is particularly suitable for refrigerating an environment that must be kept at temperatures between - 5 ºC and + 25 ºC, like for instance a refrigerated container in which food or pharmaceutical products are stored.

In other preferred embodiments, in which the thermal accumulator is intended to have a dual function of refrigerating and heating an external environment, depending on the seasonal temperature of said environment, the PCM is an aqueous salt solution in which the solute is sodium formate, wherein the mass fraction of sodium formate in the solution is comprised between 0.45 and 0.55. The crystallization temperature of the brine in this range of mass fraction is between + 6 ºC and + 15 ºC. A crystallization temperature, or phase change temperature, of the PCM greater than 0 ºC is particularly suitable for providing a dual function of refrigerating or heating an environment that is submitted to seasonal or daily temperature variations and in which goods are stored that must be maintained cool but without freezing. If the temperature of the environment is greater than the phase change temperature of the PCM, the thermal accumulator refrigerates the environment, otherwise the same thermal accumulator heats the environment.

In other preferred embodiments, in which the thermal accumulator is intended to refrigerate an external environment at lower temperatures, the PCM is an aqueous salt solution in which the solute is a mixture of sodium formate and potassium formate, wherein the mass fraction of sodium formate in the solution is 0.25 and wherein the mass fraction of potassium formate in the solution is comprised between 0.03 and 0.20, more preferably between 0.05 and 0.10. A mass fraction of 0.25 of sodium formate corresponds to the eutectic point for a sodium formate brine, in which point a minimum value of the crystallization temperature is reached. The addition of potassium formate lowers the solid-liquid phase change temperature.

The invention also comprises a refrigerated container for transporting goods, comprising a thermally insulated main chamber for storing goods and a thermal accumulator according to the invention, said thermal accumulator being arranged in said refrigerated container so that the indoor environment of said main chamber is in air communication with the external walls of said thermal accumulator.

The thermal accumulator can be located inside the main chamber. However, in this case the area of the main chamber close to the thermal accumulator is exposed to the low temperature of the external walls of the thermal accumulator, even if there is not forced convection in play. Indeed, the goods facing the external walls of the thermal accumulator are refrigerated by radiation, and the area close to the thermal accumulator is also refrigerated by natural convection. This can damage the goods stored in this area, for instance when these goods are fruits or pharmaceutical products. In order to overcome this problem, in preferred embodiments the refrigerated container comprises:
- a thermally insulated auxiliary chamber in which the thermal accumulator is located, the outer surface of the external walls of the thermal accumulator being in contact with the indoor environment of the auxiliary chamber, said auxiliary chamber being separated from the main chamber;
- conduits that put in air communication the indoor environment of said main chamber with the indoor environment of said auxiliary chamber;
- an air impeller arranged for establishing a forced circulation of air between said indoor environment of the main chamber and said indoor environment of the auxiliary chamber through said conduits;
- a temperature sensor arranged for measuring a temperature in said indoor environment of the main chamber;
- a control device configured to control the air flow rate provided by said air impeller depending on a deviation of the temperature measured by said temperature sensor with respect to a set-point value.

This configuration provides a better control of the temperature in the main chamber, and prevents the thermal accumulator from refrigerating the goods stored in the main chamber when it is not appropriate.

Preferably, the refrigerated container comprises one or several electric batteries arranged to autonomously power the air impeller and the control device. By this way the refrigerated container can run in an autonomous manner after having charged the PCM with a cooling load. This is particularly useful when the refrigerated container is intended to be loaded on a delivery vehicle, like for instance a truck or a van, since it is no necessary for the thermal accumulator to receive any power from the vehicle. The vehicle can be parked with the engine stopped during a long period of time while the thermal accumulator refrigerates the main chamber in which goods are stored.

Preferably the heat exchanger of the thermal accumulator is designed to be the evaporator of a refrigeration unit that typically comprises said evaporator, a compressor, a condenser and an expansion valve.

In some embodiments the heat exchanger is configured to be detachably connected to the refrigeration unit. In this case the refrigerated container does not comprise the refrigeration unit. The inlet port and the outlet port of the heat exchanger can be provided with quick connectors for hoses in order to connect them to the circuit of refrigerant of a refrigeration unit.

In other embodiments the refrigerated container comprises a refrigeration unit having a compressor, a condenser and an expansion valve forming a cooling circuit connected to the heat exchanger of the thermal accumulator, so that said heat exchanger is the evaporator of said refrigeration unit. At least the compressor and the condenser of said refrigeration unit are located outside the main chamber and outside the auxiliary chamber. Preferably, they are located in a second auxiliary chamber of the thermal accumulator, said second auxiliary chamber having an opening that allows air to circulate from the external environment surrounding the refrigerated container.

The invention also comprises other detail features illustrated in the following detailed description of an embodiment of the invention and in the attached drawings.

### Brief Description of the Drawings

The advantages and features of the invention will be understood from the following description in which preferred embodiments of the invention are described with reference to the drawings without limiting the scope of the invention defined in the claims.
Fig. 1 is a perspective view of a first embodiment of the thermal accumulator, in which the frontal external wall and partially the upper external wall have been cropped in order to show the inner parts of the thermal accumulator.
Fig. 2 is a sectional frontal view of the thermal accumulator of Fig. 1.
Fig. 3 is a sectional top view of the thermal accumulator of Fig. 1.
Fig. 4 is a zoomed view of an area of Fig. 3 showing a straight tube of the heat exchanger at the corner between an external wall and an internal wall.
Fig. 5 is a sectional top view of a second embodiment of the thermal accumulator.
Fig. 6 is a sectional top view of a third embodiment of the thermal accumulator.
Fig. 7 is a front perspective view of an embodiment of a refrigerated container comprising a thermal accumulator according to the invention.
Fig. 8 is a partial sectional lateral view of the refrigerated container.
Fig. 9 is a rear perspective view of the refrigerated container.
Fig. 10 is a front sectional view of another embodiment of the refrigerated container that only differs in the conduits communicating the main chamber and the auxiliary chamber.

### Detailed Description of Embodiments of the Invention

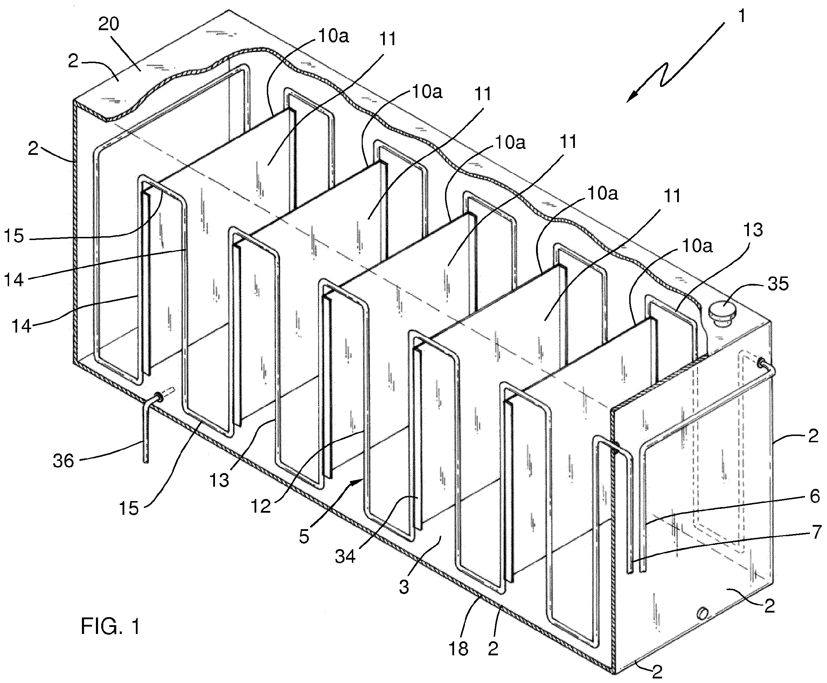

Figs. 1 to 4 show a first embodiment of the thermal accumulator 1.

The thermal accumulator 1 is constituted by six external walls 2 forming a rectangular parallelepiped which delimitate a storage space 3, several internal walls 10a that connect between them two facing of said external walls 2, and a heat exchanger 5 having a section 12 that goes inside the storage space 3. The storage space 3 contains a PCM (phase change material) 4 which is in contact with said section 12 of the heat exchanger 5 and with the inner surface 8 of the external walls 2. The outer surface 9 of the external walls 2 are in contact with the external environment surrounding the thermal accumulator 1, so that the PCM 4 exchanges heat with the external environment through said external walls 2.

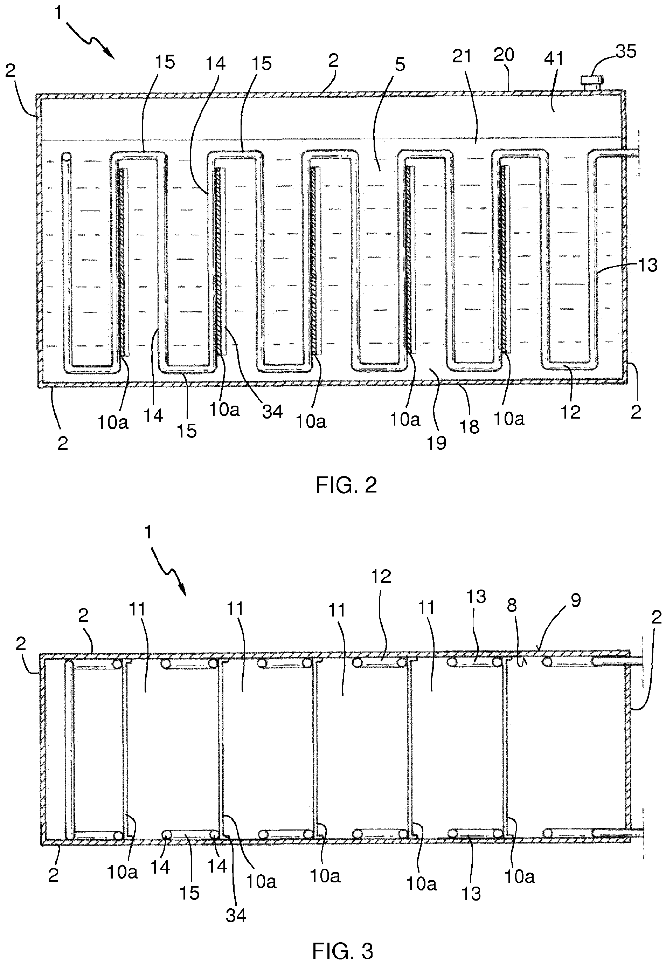

The external walls 2 and the internal walls 10a are copper sheets. For instance, they are 0.0197 inch (0.5 mm) thick sheets of soft annealed Copper Alloy 110 (containing at least 99.9 % of copper). The internal walls 10a have folded ends that form planar flanges 34 which rest against the inner surface 8 of said two facing external walls 2 and which are joined to said inner surface 8 preferably by brazing. The internal walls 10a are parallel between them and transversal to the two facing external walls 2, so that these walls 10a, 2 form cells 11 that contain PCM 4 in the storage space 3. As can be appreciated in Fig. 2, the internal walls 10a are separated from a bottom wall 18 and from an upper wall 20 which delimitate the storage space 3. In this exemplary embodiment the bottom wall 18 and the upper wall 20 are also external walls 2. A lower band 19 and an upper band 21 of the storage space 3 are thus defined between the bottom wall 18 and a lower edge of the internal walls 10a, and between the upper wall 20 and an upper edge of said internal walls 10a, respectively. The storage space 3 is filled with PCM 4 so that the level of PCM 4 in said storage space 3 is in the upper band 21. The cells 11 are thus in fluid communication with one another through the lower band 19 and the upper band 21. Therefore, the fraction of PCM 4 which is in liquid state can circulate between the cells 11 through these bands 19, 21. As it can also be appreciated from Fig. 2, an air gap 41 is provided between the level of PCM 4 and the upper wall 20. This air gap 41 acts as an expansion chamber to absorb the variations of volume of the PCM 4 at the phase change. The upper wall 20 is provided with a cap 35 than can be removed to fill the storage space 3 with PCM 4. At least a temperature probe 36 is inserted in the storage space 3 for measuring the temperature of the PCM 4 in order to control the process of charging the thermal accumulator 1 with a thermal load and also for monitoring the state of the PCM 4 during the phase of delivering the thermal load to the environment.

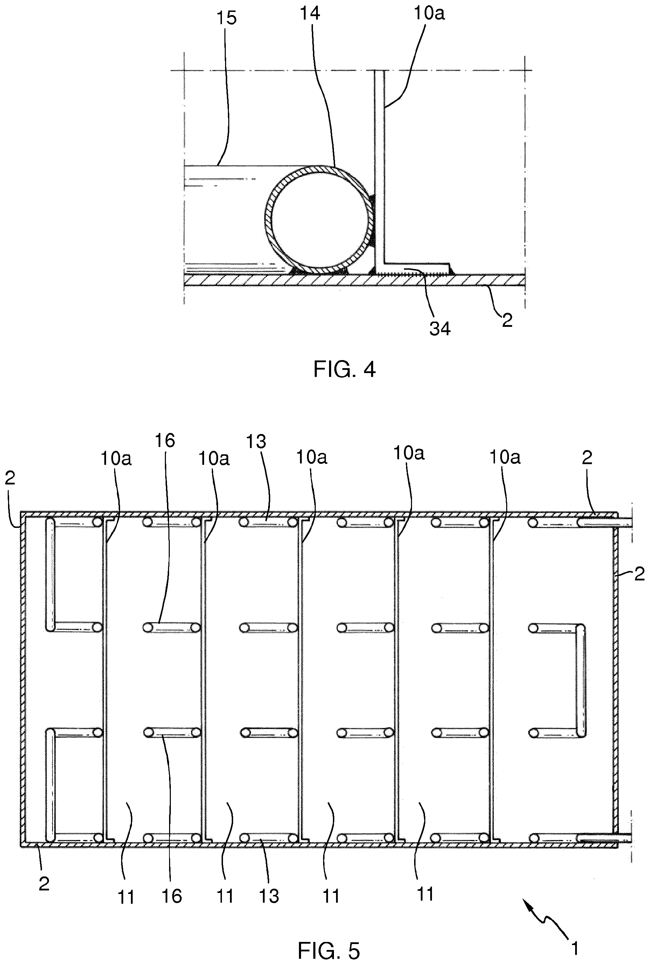

The section 12 of the heat exchanger 5 that goes inside the storage space 3 is a coil tube comprising two planar sections 13 which are parallel to one and the other of the two facing external walls 2 and which are joined to one and the other of said two facing external walls 2. This coil tube is also made of Copper Alloy 110. Each planar section 13 of the coil tube comprises a succession of straight tubes 14 connected to one another by tube elbows 15. The straight tubes 14 are positioned so that, at the corners formed between one of the two facing external walls 2 and the internal wall 10a connected to it, one of said straight tubes 14 is joined to a face of at least one of the external wall 2 and the internal wall 10a. Preferably, they are joined to both walls 2, 10a as shown in Fig. 4. In the exemplary embodiment, the straight tubes 14 are joined to the walls 2, 10a by brazing. Each of said planar sections 13 of the heat exchanger 5 is thus joined to a face of one of the two facing external walls 2. As can be seen in Figs. 1 and 2, the tube elbows 15 pass from one cell 11 to another through the lower band 19 and the upper band 21.

The heat exchanger 5 is formed by a conduit for fluids, in this case in form of a coil tube, and has an inlet port 6 and an outlet port 7, so that a heat transfer fluid can enter the thermal accumulator 1 through the inlet port 6, flow inside said heat exchanger 5 while exchanging heat with the PCM 4 and exit the thermal accumulator 1 through the outlet port 7. This heat transfer fluid circulating in the heat exchanger 5 provides a thermal load to charge the thermal accumulator 1.

Preferably the PCM is an aqueous salt solution comprising as a solute a salt selected from the group consisting in sodium formate, potassium formate, calcium formate and magnesium formate.

The following examples are some possible preferred choices for the PCM.

### Example 1 (solute: sodium formate)

The PCM 4 is an aqueous salt solution in which the solute is sodium formate. The mass fraction of sodium formate in the solution is selected in the range between 0.05 and 0.25. The crystallization temperature of the brine in this range of mass fraction is the following:

| Mas fraction of sodium formate | Crystallization temperature |
|---|---|
| 0.05 | - 4 ºC |
| 0.10 | - 9 ºC |
| 0.25 | - 16 ºC |

### Example 2 (solute: sodium formate)

The PCM is an aqueous salt solution in which the solute is sodium formate. The mass fraction of sodium formate in the solution is selected in the range between 0.45 and 0.55.The crystallization temperature of the brine in this range of mass fraction is the following:

| Mas fraction of sodium formate | Crystallization temperature |
|---|---|
| 0.45 | + 6 ºC |
| 0.55 | + 15 ºC |

### Example 3 (solute: sodium formate + potassium formate)

The PCM is an aqueous salt solution in which the solute is a mixture of sodium formate and potassium formate. The mass fraction of sodium formate in the solution is 0.25, which corresponds to the eutectic point for a sodium formate brine. The mass fraction of potassium formate in the solution is selected in the range between 0.03 and 0.20, more preferably between 0.05 and 0.10. The crystallization temperature of the brine in this range of mass fraction of potassium formate, for a mass fraction of sodium formate of 0.25, is the following:

| Mas fraction of sodium formate | Mas fraction of potassium formate | Crystallization temperature |
|---|---|---|
| 0.25 | 0.03 | - 21 ºC |
| 0.25 | 0.05 | - 25 ºC |
| 0.25 | 0.10 | - 33 ºC |
| 0.25 | 0.20 | - 48 ºC |

### Example 4 (solute: potassium formate)

The PCM 4 is an aqueous salt solution in which the solute is potassium formate. The mass fraction of potassium formate in the solution is selected in the range between 0.17 and 0.38. The crystallization temperature of the brine in this range of mass fraction is the following:

| Mas fraction of potassium formate | Crystallization temperature |
|---|---|
| 0.17 | - 9 ºC |
| 0.24 | - 16 ºC |
| 0.38 | - 34 ºC |

### Example 5 (solute: calcium formate)

The PCM 4 is an aqueous salt solution in which the solute is calcium formate. The mass fraction of potassium formate in the solution is 0.14, which corresponds to the maximum solubility of potassium formate in water. The crystallization temperature of the brine is - 12 ºC.

### Example 6 (solute: magnesium formate)

The PCM 4 is an aqueous salt solution in which the solute is magnesium formate. The mass fraction of magnesium formate in the solution is 0.12, which corresponds to the maximum solubility of magnesium formate in water. The crystallization temperature of the brine is - 10 ºC.

### Example 7 (solute: sodium formate + calcium formate)

The PCM 4 is an aqueous salt solution in which the solute is a mixture of sodium formate and calcium formate. The mass fraction of sodium formate in the solution is 0.25, which corresponds to the eutectic point for a sodium formate brine. The mass fraction of calcium formate in the solution is 0.14, which corresponds to the maximum solubility of calcium formate in water. The crystallization temperature of the brine is - 35 ºC.

### Example 8 (solute: sodium formate + magnesium formate)

The PCM 4 is an aqueous salt solution in which the solute is a mixture of sodium formate and magnesium formate. The mass fraction of sodium formate in the solution is 0.25, which corresponds to the eutectic point for a sodium formate brine. The mass fraction of magnesium formate in the solution is 0.12, which corresponds to the maximum solubility of magnesium formate in water. The crystallization temperature of the brine is - 30 ºC.

Besides these examples, the PCM can be an aqueous salt solution in which the solute is formed by other mixtures of the above mentioned formate salts. It can also include suitable additives in addition to said formate salts.

Fig. 5 shows a second embodiment which only differs from the first embodiment in that the section 12 of the heat exchanger 5 that goes inside the storage space 3 is a coil tube that comprises inner sections 16 which are separated from the two facing external walls 2 and which are joined to at least one of the internal walls 10a.

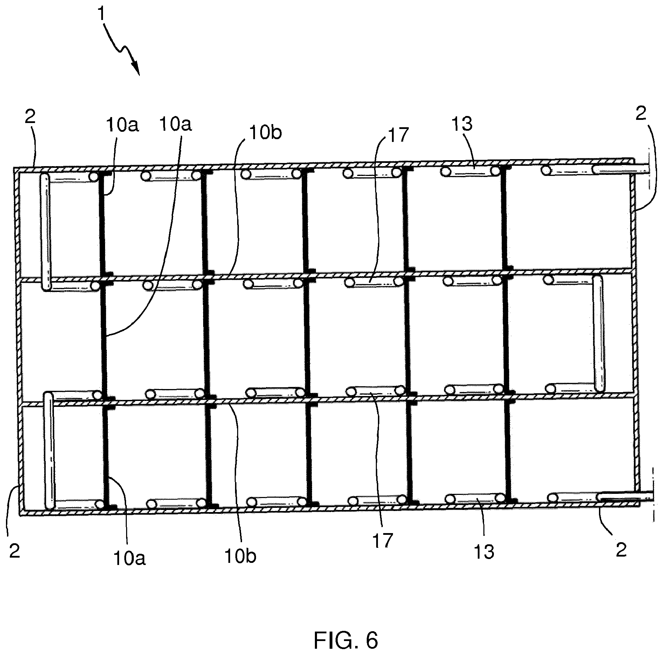

Fig. 6 shows a third embodiment which only differs from the second embodiment in that it comprises longitudinal internal walls 10b which are orthogonal to the transversal internal walls 10a and which connect between them two facing external walls 2, and in that the inner sections 16 of the coil tube are inner planar sections 17 which are parallel to said longitudinal internal walls 10b and which are joined to them. In this embodiment, the transversal internal walls 10a that connect between them the two facing external walls 2 are not continuous. In fact, they are discontinued by longitudinal internal walls 10b to which they are joined.

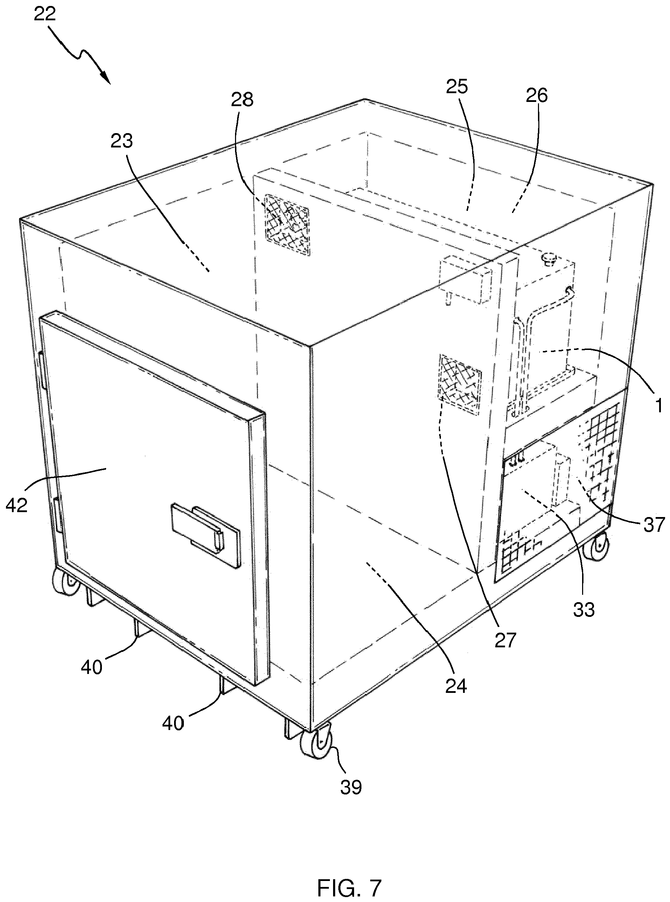

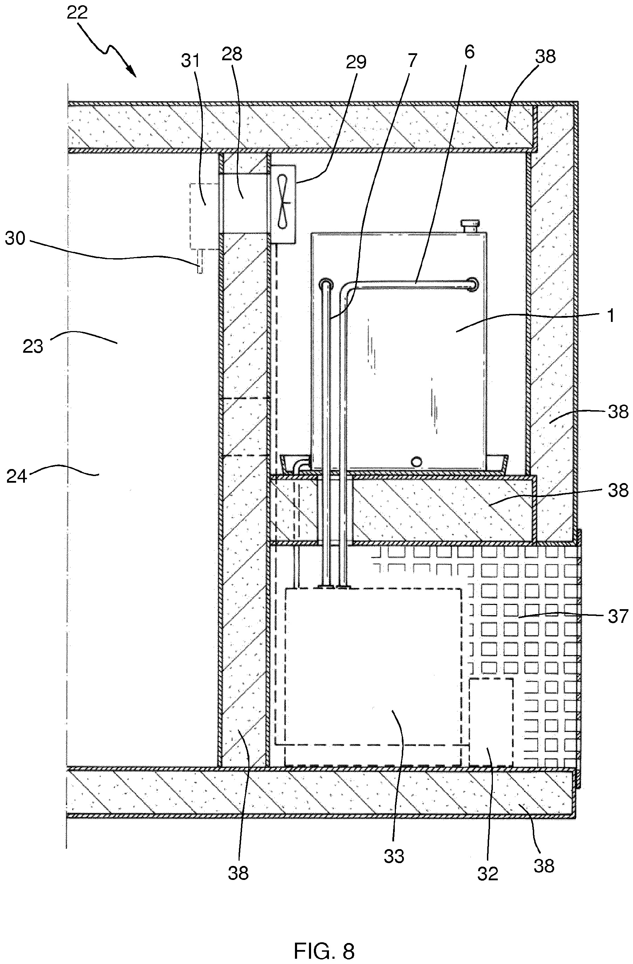

Figs. 7 to 10 show a refrigerated container 22 for transporting goods, comprising a thermally insulated main chamber 23 for storing goods and a thermal accumulator 1 according to the invention. The front wall of the main chamber 23 is provided with an openable door 43 that allows a person to access the goods from the outside of the refrigerated container 22. The refrigerated container 22 also comprises a thermally insulated auxiliary chamber 25 in which the thermal accumulator 1 is located, so that the outer surface 9 of the external walls 2 of the thermal accumulator 1 are in contact with the indoor environment 26 of said auxiliary chamber 25. Both the main chamber 23 and the auxiliary chamber 25 are delimited by thermally isolating walls 38. The auxiliary chamber 25 is separated from the main chamber 23. However, the indoor environments 24, 26 of the two chambers 23, 25 are in air communication between them by conduits 27, 28. In the example shown in Figs. 7 and 8 the conduits 27, 28 are two openings that extend through the thermally isolating wall 38 that separates the two chambers 23 and 25. At least one of these openings is provided with an air impeller 29 that drives an air flow through said opening, so that a forced circulation of air is established between the indoor environment 24 of the main chamber 23 and the indoor environment 26 of the auxiliary chamber 26 through said conduits 27, 28. This forced circulation of air puts in air communication the indoor environment 24 of the main chamber 23 with the external walls 2 of the thermal accumulator 1 located in the auxiliary chamber 25. A temperature sensor 30 is arranged for measuring a temperature in the indoor environment 24 of the main chamber 23. A control device 31 is comprised in the refrigerated container 22. The control device 31 is configured to control the air flow rate provided by the air impeller 29 depending on a deviation of the temperature measured by the temperature sensor 30 with respect to a set-point value. The refrigerated container 22 also comprises an electric battery 32 able to autonomously power the air impeller 29 and the control device 31.

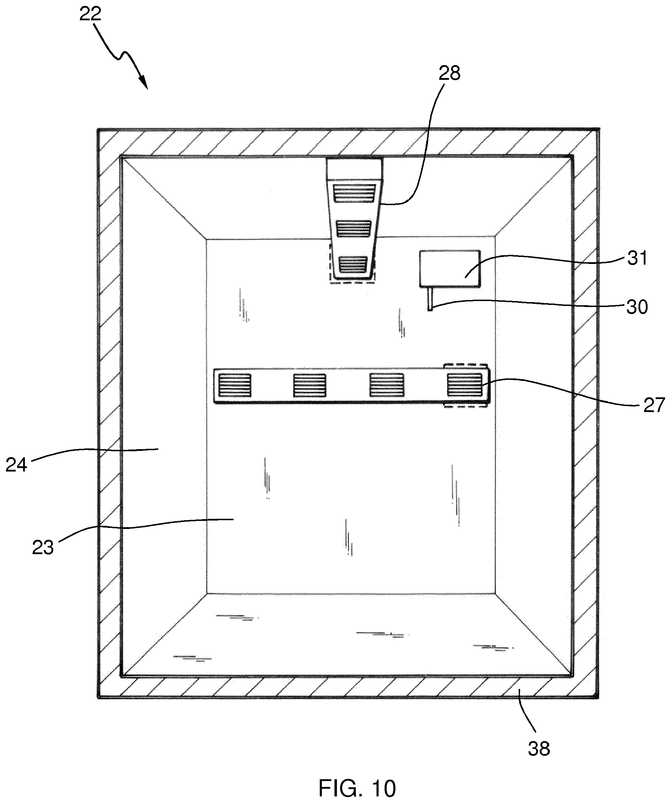

Fig. 10 shows another embodiment of the refrigerated container 22 that only differs in the conduits 27, 28 that communicate the two chambers 23, 25. In this case the conduits 27, 28 are air ducts that extend in the main chamber 23 in order to better distribute the flow of air in said chamber 23.

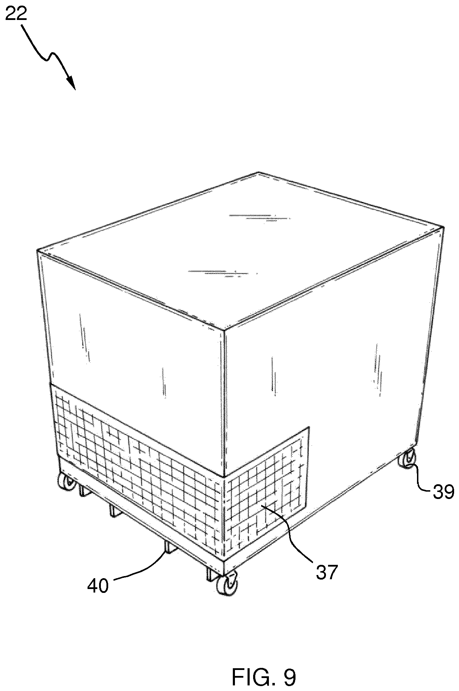

As shown in Fig. 9, the bottom wall of the refrigerated container 22 is optionally provided with wheels 39 and/or with guides 40 for a pallet fork. These means 39, 40 make transportation of the refrigerated container 22 easier.

The refrigerated container 22 optionally comprises a refrigeration unit 33 having a compressor, a condenser and an expansion valve forming a cooling circuit connected to the heat exchanger 5 of the thermal accumulator 1, so that the heat exchanger 5 is the evaporator of said refrigeration unit 33. At least the compressor and the condenser, preferably the expansion valve also, of the refrigeration unit 33 are located outside the main chamber 23 and outside the auxiliary chamber 25. They are preferably located in a second auxiliary chamber 37 having an opening to the external environment surrounding the refrigerated contained 22. In the embodiment shown in Figs. 7 to 9 the second auxiliary chamber 37 is located under the auxiliary chamber 25 and it is separated from said external environment by a grid that allows air to circulate.

The refrigerated container 22 according to the invention can advantageously be applied to be loaded on a vehicle for transporting goods, such as a truck or a van, in particular for transporting food and pharmaceutical products. It is particularly suitable to this purpose because the thermal accumulator 1, in comparison to those from prior art, has a reduced weight, it accumulates less dirt and it can be cleaned more easily. In addition, when the mentioned formate brines are used as PCM, it is suitable for food contact applications and it is not harmful to the environment. Furthermore, the refrigerated container 22 is able to effectively maintain the temperature of the goods stored in the main chamber 23 at the desired value without receiving any power from the vehicle after having charged the thermal accumulator 1 with a cooling load. This is done preferably by connecting the refrigeration unit 33 to an external electricity network. When the refrigerated container 22 does not comprise a refrigeration unit 33, this is done by connecting the inlet and the outlet ports of the heat exchanger 5 to the refrigerant circuit of an external refrigeration unit by means of connection hoses, so that said heat exchanger 5 becomes the evaporator of said refrigeration unit.

## Claims

1. Thermal accumulator (1) containing a PCM (phase change material), said thermal accumulator (1) comprising external walls (2) delimiting a closed storage space (3), a PCM (4) contained in said storage space (3) and at least a heat exchanger (5) formed by a conduit for fluids which has an inlet port (6) and an outlet port (7), said heat exchanger (5) having a section (12) that goes inside said storage space (3) and which is in contact with said PCM (4), and wherein said external walls (2) have an inner surface (8) in contact with said PCM (4) and an outer surface (9) in contact with an external environment surrounding said thermal accumulator (1), **characterised in that**:
- at least two of said external walls (2) are facing one another and are connected between them by internal walls (10a, 10b), said internal walls (10a, 10b) being located inside said storage space (3) and being arranged so that cells (11) containing said PCM (4) are formed in said storage space (3) by said internal walls (10a, 10b) and said external walls (2);
- said external walls (2) and said internal walls (10a, 10b) are flat metal sheets;
- said section (12) of said heat exchanger (5) that goes inside said storage space (3) is joined to a face of at least one of said external walls (2) and internal walls (10a, 10b) that form said cells (11).

2. Thermal accumulator (1) according to claim 1, **characterised in that** said external walls (2) and said internal walls (10a, 10b) are flat copper sheets.

3. Thermal accumulator (1) according to any one of claims 1 or 2, **characterised in that** said section (12) of the heat exchanger (5) is a coil tube comprising at least a planar section (13) which is parallel to one of said two facing external walls (2) and which is joined to this external wall (2).

4. Thermal accumulator (1) according to any one of claims 1 or 2, **characterised in that** said coil tube comprises two planar sections (13), which are parallel to one and the other of said two facing external walls (2) and which are joined to one and the other of said two facing external walls (2), respectively.

5. Thermal accumulator (1) according to any one of claims 3 or 4, **characterised in that** in said planar section (13) of said coil tube comprises a succession of straight tubes (14) connected to one another by tube elbows (15), said straight tubes (14) being positioned so that at the corners formed between said one of the two facing external walls (2) and said internal walls (10a) one of said straight tubes (14) is joined to a face of at least one of the external wall (2) and the internal wall (10a).

6. Thermal accumulator (1) according to any one of claims 2 to 5, **characterised in that** said section (12) of the heat exchanger (5) is a coil tube comprising at least an inner section (16, 17) which is separated from said two facing external walls (2) and which is joined to at least one of said internal walls (10a).

7. Thermal accumulator (1) according to claim 6, **characterised in that** said coil tube comprises at least an inner planar section (17) which is parallel to one of said internal walls (10b) and which is joined to this internal wall (10b).

8. Thermal accumulator (1) according to any one of claims 1 to 7, **characterised in that** said internal walls (10a, 10b) are separated from a bottom wall (18) that delimitates said storage space (3), so that a lower band (19) of said storage space (3) is defined between said bottom wall (18) and a lower edge of said internal walls (10a, 10b), said cells (11) being in fluid communication with one another through said lower band (19), and **in that** said internal walls (10a, 10b) are separated from an upper wall (20) that delimitates said storage space (3), so that an upper band (21) of said storage space (3) is defined between said upper wall (20) and an upper edge of said internal walls (10a, 10b), said cells (11) being in fluid communication with one another through said upper band (21), and wherein the level of said PCM (4) in said storage space (3) is in said upper band (21).

9. Thermal accumulator (1) according to any one of claims 1 to 7, **characterised in that** said internal walls (10a, 10b) have folded ends that form a planar flange (34), and said planar flange (34) rests against the inner surface (8) of one of said two facing external walls (2) and is joined to said inner surface (8).

10. Thermal accumulator (1) according to any one of claims 1 to 9, **characterised in that** said PCM (4) is an aqueous salt solution comprising as a solute a salt selected from the group consisting in sodium formate, potassium formate, calcium formate and magnesium formate.

11. Thermal accumulator (1) according to claim 10, **characterised in that** said PCM (4) is an aqueous salt solution in which the solute is sodium formate, wherein the mass fraction of sodium formate in the solution is comprised between 0.05 and 0.25.

12. Thermal accumulator (1) according to claim 10, **characterised in that** said PCM (4) is an aqueous salt solution in which the solute is sodium formate, wherein the mass fraction of sodium formate in the solution is comprised between 0.45 and 0.55.

13. Thermal accumulator (1) according to claim 10, **characterised in that** said PCM (4) is an aqueous salt solution in which the solute is a mixture of sodium formate and potassium formate, wherein the mass fraction of sodium formate in the solution is 0.25 and the mass fraction of potassium formate in the solution is comprised between 0.03 and 0.20, more preferably between 0.05 and 0.10.

14. Refrigerated container (22) for transporting goods, comprising a thermally insulated main chamber (23) for storing goods and a thermal accumulator (1) according to any one of claims 1 to 14, said thermal accumulator (1) being arranged in said refrigerated container (22) so that the indoor environment (24) of said main chamber (23) is in air communication with the external walls (2) of said thermal accumulator (1).

15. Refrigerated container (22) according to claim 14, **characterised in that** it comprises:
- a thermally insulated auxiliary chamber (25) in which said thermal accumulator (1) is located, the outer surface (9) of the external walls (2) of the thermal accumulator (1) being in contact with the indoor environment (26) of said auxiliary chamber (25), said auxiliary chamber (25) being separated from said main chamber (23);
- conduits (27, 28) that put in air communication said indoor environment (24) of the main chamber (23) with said indoor environment (26) of the auxiliary chamber (25);
- an air impeller (29) arranged for establishing a forced circulation of air between said indoor environment (24) of the main chamber (23) and said indoor environment (26) of the auxiliary chamber (26) through said conduits (27, 28);
- a temperature sensor (30) arranged for measuring a temperature in said indoor environment (24) of the main chamber (23);
- a control device (31) configured to control the air flow rate provided by said air impeller (29) depending on a deviation of the temperature measured by said temperature sensor (30) with respect to a set-point value.

16. Refrigerated container (22) according to claim 15, **characterised in that** it comprises one or several electric batteries (32) arranged to autonomously power said air impeller (29) and said control device (31).

17. Refrigerated container (22) according to any one of claims 14 to 16, **characterised in that** it comprises a refrigeration unit (33) having a compressor, a condenser and an expansion valve forming a cooling circuit connected to said heat exchanger (5) of the thermal accumulator (1), so that said heat exchanger (5) is the evaporator of said refrigeration unit (33), and wherein at least the compressor and the condenser of said refrigeration unit (33) are located outside said main chamber (23) and outside said auxiliary chamber (25).
